# EUROPÄISCHE PATENTSCHRIFT

(11) **EP 0 667 978 B1**
(45) Veröffentlichungstag und Bekanntmachung des Hinweises auf die Patenterteilung: **05.06.1996**
(21) Anmeldenummer: 94900088.9
(22) Anmeldetag: 02.11.1993
(51) Int. Cl.: G10K 11/00, B06B 1/06

(54) **ULTRASCHALL-PRÜFKOPF UND VERFAHREN ZU SEINEM BETRIEB**
ULTRASONIC PROBE AND METHOD OF OPERATING IT
DETECTEUR ULTRASONORE ET SON PROCEDE DE FONCTIONNEMENT

(30) Priorität: 03.11.1992 DE 9214948 U
(43) Veröffentlichungstag der Anmeldung: 23.08.1995
(73) Patentinhaber: SIEMENS AKTIENGESELLSCHAFT, D-80333 München (DE)
(72) Erfinder: FISCHER, Eberhard, D-91341 Röttenbach (DE); RATHGEB, Werner, D-91365 Weilersbach (DE); ERHARD, Anton, D-12307 Berlin (DE); MÖHRLE, Walter, D-12109 Berlin (DE); WÜSTENBERG, Hermann, D-14163 Berlin (DE)
(86) Internationale Anmeldenummer: EP9303069
(87) Internationale Veröffentlichungsnummer: WO9410681

(56) Entgegenhaltungen:
- EP-A- 0 105 966
- DE-A- 3 715 914
- PATENT ABSTRACTS OF JAPAN vol. 10, no. 198 (P-476)11. Juli 1986 & JP,A,61 040 563 (HITACHI LTD) 26. Februar 1986
- PATENT ABSTRACTS OF JAPAN vol. 10, no. 198 (P-476)11. Juli 1986 & JP,A,61 040 563

## Beschreibung

Die Erfindung bezieht sich auf einen Ultraschall-Prüfkopf zur Prüfung von Fehlern in einem Werkstück und auf ein Verfahren zu seinem Betrieb. Ein solcher Ultraschall-Prüfkopf wird in der Patentschrift EP-A-0 105 966 beschrieben.

In einem Werkstück befindliche Rißfehler können unterschiedliche Tiefenlage und unterschiedliche Orientierung relativ zur Oberfläche des Werkstückes aufweisen. Um bei einer zerstörungsfreien Ultraschallprüfung alle möglichen Fehler erfassen zu können, ist es erforderlich, jeweils mehrere für unterschiedliche Fehlerarten geeignete Ultraschall-Prüfköpfe zu verwenden, die in aufeinanderfolgenden Messungen eingesetzt werden müssen.

Aus "Materialprüfung 28 (1988) Seiten 20 bis 24" sind Prüfköpfe bekannt, die jeweils zwei im Sende-Empfangs-Modus betriebene Ultraschallwandler-Arrays enthalten. Diese UltraSchallwandler-Arrays sind an Vorsatzkeile angekoppelt, die angepaßt an das jeweilige Prüfproblem ausgewechselt werden können. Obwohl mit diesen bekannten Anordnungen bereits eine hohe Flexibilität bezüglich der Einschallrichtung erreicht werden kann, müssen jeweils angepaßt an die Tiefenlage des Fehlers unterschiedliche Prüfköpfe eingesetzt werden. Das Auswechseln der Prüfköpfe oder der Prismenkeile und die damit verbundene Notwendigkeit, die Messungen durch erneutes Überfahren der gesamten Prüfzone mehrfach zu wiederholen, ist zeitaufwendig und insbesondere in Umgebungen, die zu einer Strahlenexposition des prüfenden Personals führen können, zu vermeiden. Zusätzlich wird die Korrelation der in den unterschiedlichen Messungen erhaltenen Prüfergebnisse erschwert.

Der in der Ansprüchen 1-11 definierten Erfindung liegt nun die Aufgabe zugrunde, einen Ultraschall-Prüfkopf zur Ultraschallprüfung von Fehlern in einem Werkstück anzugeben, mit dem ohne Prüfkopfwechsel eine Vielzahl unterschiedlich orientierter und in unterschiedlicher Tiefenlage befindliche Fehler erfaßt werden können. Außerdem soll ein Verfahren zum Betrieb des Ultraschall-Prüfkopfes gemäß der Erfindung angegeben werden.

Die genannten Aufgaben werden jeweils gelöst mit den Merkmalen der Patentansprüche 1 bzw. 9.

Ein Ultraschall-Prüfkopf zur Ultraschallprüfung von Fehlern in einem Werkstück enthält gemäß der Erfindung eine in einem gemeinsamen Gehäuse angeordnete Ultraschallwandler-Anordnung mit wenigstens einem Ultraschallwandler-Array, das für sich im Werkstück ausbreitende Transversalwellen im Impuls-Echo-Modus betreibbar ist, wobei die Ultraschallwandler-Anordnung wenigstens zwei akustisch voneinander getrennte Ultraschallwandler umfaßt, die für sich im Werkstück oberflächennah ausbreitende Longitudinalwellen im Sende-Empfangs-Modus betreibbar sind. Durch diese Maßnahmen kann ein kompakt gestalteter Ultraschall-Prüfkopf gebaut werden, mit dem sowohl oberflächennahe als auch oberflächenferne Fehler nachgewiesen werden können.

Die Erfindung beruht dabei auf der Überlegung, daß eine räumliche Auftrennung zwischen den zum Senden und den zum Empfangen vorgesehenen Ultraschallwandlern, d. h. ein Betrieb der Ultraschallwandler-Anordnung im Sende-Empfangs-Modus, nur dann notwendig ist, wenn Fehler nachgewiesen werden sollen, die sich unmittelbar unter der Oberfläche des Werkstückes befinden. Eine im Impuls-Echo-Modus betriebene Ultraschallwandler-Anordnung, d. h. die zum Senden aktiven Ultraschallwandler sind nach dem Senden auch als Empfänger aktiv, ist zum Nachweis oberflächennaher Fehler nicht geeignet, da sich bei einem solchen Betrieb stets ein sich an den Sendevorgang anschließendes Zeitfenster ergibt, in dem die Ultraschallwandler-Anordnung für die vom Fehler zurückreflektierten Signale durch sogenanntes Nachklingeln praktisch blind ist. Dieses Nachklingeln wird verursacht durch prüfkopf interne Reflexionen, die von den Ultraschallwandlern empfangen werden und sich mit den aus der oberflächennahen Zone zurückreflektierten Signalen überlagern und deren Nachweis erschweren. Durch eine Aufteilung der Sende- und Empfangsfunktion auf unterschiedliche Ultraschallwandler wird dieses Nachklingeln unterdrückt, und es können oberflächennahe Fehler detektiert werden. Zum Nachweis oberflächenferner Fehler ist eine solche räumliche Auftrennung nicht erforderlich, da die Echosignale aus größeren Tiefen erst dann eintreffen, wenn die Störungen durch prüfkopf interne Reflexionen weitgehend abgeklungen sind. Die oberflächenfernen Fehler können dann für unterschiedliche Tiefenbereiche durch ein im Impuls-Echo-Modus betriebenes Ultraschallwandler-Array erfaßt werden, das Transversalwellen in das Werkstück einkoppelt, deren Ausbreitungsrichtung azimutal vorzugsweise im Winkelbereich zwischen 45° und 60° durch entsprechende phasengesteuerte Ansteuerung der einzelnen Wandlerelemente elektronisch gesteuert werden kann.

In einer bevorzugten Ausgestaltung der Erfindung ist das Ultraschallwandler-Array neben einem als Sender und Empfänger für Longitudinalwellen betreibbaren Ultraschallwandler angeordnet.

In einer weiteren vorteilhaften Ausgestaltung der Erfindung ist das Ultraschallwandler-Array zwischen zwei als Sender und Empfänger für Longitudinalwellen betreibbare Ultraschallwandler angeordnet.

Vorzugsweise sind diese Ultraschallwandler ebenfalls als Array ausgebildet. Dadurch können die in das Werkstück eingekoppelten Longitudinalwellen zusätzlich lateral geschwenkt werden.

In einer vorteilhaften Ausgestaltung der Erfindung haben die neben dem Ultraschallwandler-Array angeordneten Ultraschallwandler eine rechteckige Empfangs- oder Sendefläche und sind mit ihrer Längskante schräg zur Längskante des Ultraschallwandler-Arrays insbesondere derart angeordnet, daß ihre Längskanten untereinander einen spitzen Winkel einnehmen.

In einer besonders bevorzugten Ausführungsform enthält der Ultraschall-Prüfkopf zusätzlich einen mit seiner Sende- oder Empfangsfläche parallel zur Ankoppelfläche angeordneten Ultraschallwandler.

In einem bevorzugten Verfahren zum Betrieb eines erfindungsgemäßen Ultraschall-Prüfkopfes wird das oder werden die Ultraschallwandler-Arrays im Sende-Empfangs-Modus betrieben.

Hierzu werden vorzugsweise zwei aus mehreren Ultraschallwandler-Elementen bestehende räumlich voneinander getrennte Untergruppen gebildet, die insbesondere durch eine aus inaktiven Ultraschallwandler-Elementen gebildete Untergruppe voneinander getrennt sind.

Zur weiteren Erläuterung der Erfindung wird auf die Ausführungsbeispiele der Zeichnung verwiesen, in deren

FIG 1 ein Prüfkopf gemäß der Erfindung in einer Draufsicht veranschaulicht ist.

FIG 2 und 3 zeigen den erfindungsgemäßen Prüfkopf jeweils in einem Längsschnitt. In

FIG 4 ist ein vorteilhaftes Betriebsverfahren für einem Prüfkopf angeordnetes Ultraschallwandler-Array schematisch veranschaulicht.

FIG 5 und 6 zeigen eine weitere vorteilhafte Ausgestaltung eines erfindungsgemäßen Prüfkopfes in einer Draufsicht bzw. in einem Längsschnitt. In FIG 7 ist eine besonders vorteilhafte Ausgestaltung eines Ultraschall-Prüfkopfes gemäß der Erfindung mit drei Ultraschallwandler-Arrays dargestellt.

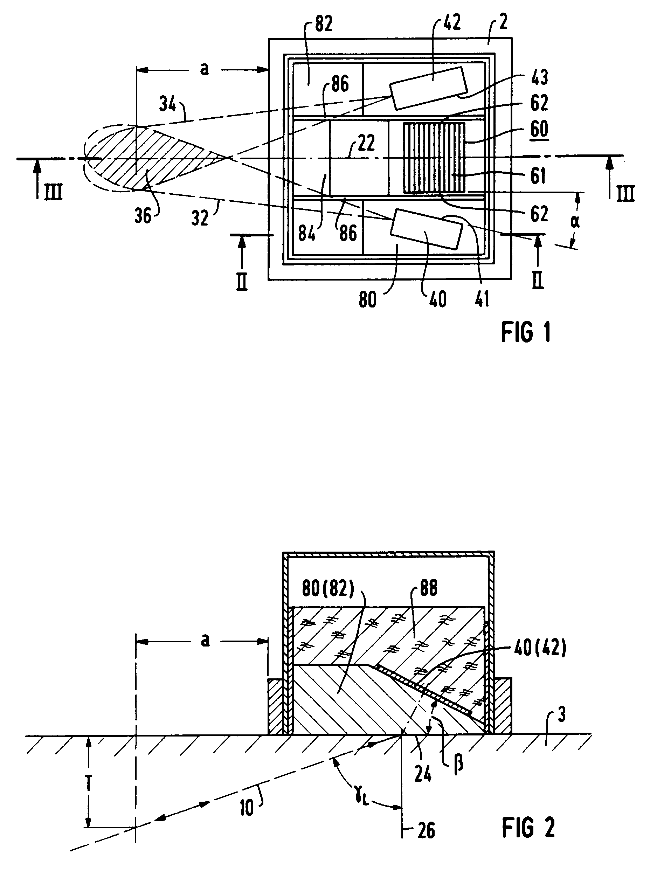

In der Draufsicht gemäß **Figur 1** enthält ein Ultraschall-Prüfkopf in einem Gehäuse 2 mit rechteckigem Grundriß zwei außermittig angeordnete piezokeramische Ultraschallwandler 40 und 42, die jeweils sowohl als Empfänger als auch als Sender für Longitudinalwellen betrieben werden können, die sich oberflächennah in einem in der Figur nicht näher dargestellten Werkstück ausbreiten. In diesem Gehäuse 2 ist außerdem zwischen den beiden Ultraschallwandlern 40 und 42 ein beispielsweise 12 einzelne Ultraschallwandler-Elemente 61 enthaltendes lineares Ultraschallwandler-Array 60 angeordnet. Das Ultraschallwandler-Array 60 ist dabei mit seinen Längskanten 62 parallel zu den Seitenwänden des Gehäuses 2 orientiert und symmetrisch zu einer Mittenebene 22 im Gehäuse 2 plaziert.

Durch laufzeitverzögerte Ansteuerung der einzelnen ebenfalls aus einer Piezokeramik bestehenden Ultraschallwandler-Elemente 61 können Ultraschallwellen (Longitudinal- und Transversalwellen) in das Werkstück unter unterschiedlichen Winkeln zur Oberflächennormale eingekoppelt werden. Durch diesen in der Mittenebene 22 erfolgenden azimutalen Schwenk können ohne Verfahren des Prüfkopfes Fehler erfaßt werden, die sich in unterschiedlicher Tiefe und Position im Werkstück befinden.

Die Ultraschallwandler 40 und 42 und das Ultraschallwandler-Array 60 sind auf akustisch voneinander getrennte keilförmig gestaltete Vorlaufkörper 80, 82 bzw. 84 angeordnet, die beispielsweise aus Polymethylmethacrylat PMMA bestehen. Im Ausführungsbeispiel der Figur sind die Vorlaufkörper 80 und 82 mit zueinander parallelen Keilflächen versehen, so daß die Sende- bzw. Empfangsflächen der auf diesen Keilflächen angeordneten Ultraschallwandler 40 und 42 in einer gemeinsamen Ebene liegen.

Die Vorlaufkörper 80 und 84 bzw. 82 und 84 sind untereinander durch eine beispielsweise aus Kork bestehende Zwischenschicht 86 akustisch getrennt, um ein direktes Übersprechen zwischen den Ultraschallwandlern 40 und 42 und dem Ultraschallwandler-Array 60 zu verhindern.

Die Ultraschallwandler 40 und 42 sind jeweils Einzelwandler mit einer rechteckförmigen Empfangs- bzw. Sendefläche und sind mit ihrer Längskante 41 bzw. 43 unter einem Winkel α schräg zur Längskante 62 des linearen Ultraschallwandler-Arrays 6 derart angeordnet, daß ihre Längskanten 41 und 43 unter einem spitzen Winkel 2α zueinander geneigt sind.

Die von den Empfangs- bzw. Sendeflächen der Ultraschallwandler 40 und 42 ausgehenden Schallkeulen 32 bzw. 34 überlagern sich unterhalb der Zeichenebene in einem mit dem Bezugszeichen 36 versehenen schraffierten Bereich, dessen Mitte sich in einem seitlichen Abstand a vom Gehäuse 2 befindet. Aus Gründen der Übersichtlichkeit ist die an der Oberfläche des Werkstücks erfolgende Brechung der Schallkeulen 32 und 34 zeichnerisch nicht dargestellt. Dieser Abstand a entspricht dem Abstand des Fokusbereiches vom Gehäuse 2, in dem sich eine maximale Empfindlichkeit der Wandleranordnung ergibt, wenn entweder einer der Ultraschallwandler 40 und 42 im Sendemodus und der andere der Ultraschallwandler 42 bzw. 40 im Empfangsmodus oder das Ultraschallwandler-Array 60 im Sendemodus und die beiden Ultraschallwandler 40 und 42 im Empfangsmodus betrieben werden.

Der seitliche Abstand a des Fokusbereiches wird durch die geometrische Anordnung der Ultraschallwandler 40 und 42 im Gehäuse und je nach der gewählten Sende-Empfangskombination zusätzlich durch die Anordnung und Ansteuerung des Ultraschallwandler-Arrays bestimmt und kann den jeweiligen Prüfanforderungen angepaßt werden.

Zur optimalen Überlagerung der Schallkeulen 32 und 34 können außerdem die Keilflächen der Vorlaufkörper 80 und 82 derart gestaltet sein, daß die Sende- bzw. Empfangsflächen der Ultraschallwandler 40 bzw. 42 zusätzlich unter einem Dachwinkel zueinander geneigt sind.

In der Schnittdarstellung gemäß **Figur 2** ist zu erkennen, daß die Ultraschallwandler 40 bzw. 42 unter einem Keilwinkel β geneigt zu einer Koppelfläche 24 angeordnet sind. Der Keilwinkel β ist dabei so ausgelegt, daß die Ultraschallwandler 40 und 42 zum Senden oder Empfangen von Longitudinalwellen 10 geeignet sind, die sich mit einem Winkel γ_{L} von etwa 70° zur Oberflächennormalen 26 und schräg zur Zeichenebene im Werkstück 3 ausbreiten, und beträgt etwa 26,5°. Durch den Keilwinkel β und die akustischen Impedanzen des Vorlaufkörpers 80 oder 82 sowie des Werkstückes 3 wird die Ausbreitungsrichtung γ_{L} der Longitudinalwellen 10 festgelegt. Durch den Dachwinkel der Keilfläche und den Neigungswinkel α (Figur 1) werden die Tiefe T und der seitliche Abstand a des unterhalb der Zeichenebene liegenden Fokusbereiches beeinflußt.

Die Ultraschallwandler 40 und 42 sind zusätzlich in einer beispielsweise aus einem Gemisch aus Leim, Gummi und Keramik bestehenden Dämpfungsmasse 88 eingebettet und auf die Vorlaufkörper 80 oder 82 über λ/4-Anpassungsschichten aufgesetzt.

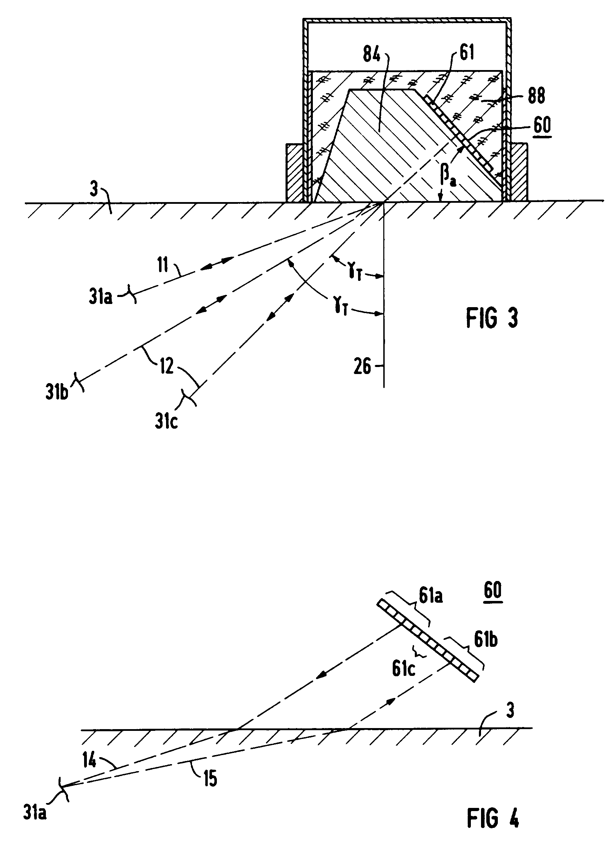

Der Schnittdarstellung gemäß **Figur 3** ist zu entnehmen, daß das lineare Ultraschallwandler-Array 60 auf einem Vorlaufkorper 84 angeordnet ist, dessen Keilwinkel βₐ größer ist als der Keilwinkel β und etwa 46,5° beträgt. Das Ultraschallwandler-Array 60 kann so angesteuert werden, daß es sowohl Transversalwellen 12 senden und empfangen kann, die sich zur Oberflächennormalen 26 unter einem Winkel γ_{T} zwischen 45° und 60° im Werkstück 3 ausbreiten, als auch Longitudinalwellen 11 senden und empfangen kann, die sich unter dem Winkel γ_{L} ≈ 70° im Werkstück 3 ausbreiten.

Bei den Longitudinalwellen 11 handelt es sich entweder um die vom Ultraschallwandler-Array 60 empfangenen Longitudinalwellen, die von den Ultraschallwandlern 40 und 42 als Longitudinalwellen 10 (Figur 2) gesendet und an einem oberflächennahen Fehler 31a reflektiert worden sind, oder um die vom Ultraschallwandler-Array 60 gesendeten und nach Reflexion am Fehler 31a von den Ultraschallwandlern 40 und 42 als Longitudinalwellen 10 empfangenen Longitudinalwellen.

Das Ultraschallwandler-Array 6 arbeitet für Transversalwellen 12 mit Ausbreitungsrichtungen kleiner als 60° im Impuls-Echo-Modus, d. h. alle Ultraschallwandler-Elemente 61 sind abwechselnd als Sender und Empfänger aktiv, und die an Fehlern 31b,c reflektierten Transversalwellen 12 werden von den Ultraschallwandler-Elementen 61 des Ultraschallwandler-Arrays 60 empfangen, die vorher die Transversalwellen 12 gesendet haben.

Für die Longitudinalwellen 11 arbeitet das Ultraschallwandler-Array 6 im Sende-Empfangs-Modus, d. h. entweder nur als Sender oder nur als Empfänger. In dieser Betriebsart sind dann die Ultraschallwandler 40 und 42 (Figur 1) entweder gemeinsam oder einzeln als Empfänger bzw. Sender aktiv. Dadurch ist gewährleistet, daß die als Sender betriebenen Ultraschallwandler von den als Empfänger betriebenen Ultraschallwandlern akustisch und räumlich voneinander getrennt sind.

Anstelle von zwei neben dem Ultraschallwandler-Array 60 angeordneten Ultraschallwandlern 40, 42 kann in einer vereinfachten Ausführungsform auch nur ein einziger Ultraschallwandler vorgesehen sein. Bei der Anordnung mit zwei Ultraschallwandlern 40 und 42 ist der vom Prüfkopf erfaßbare laterale Winkelbereich für oberflächennahe Fehler vergrößert.

In einer besonders bevorzugten Ausführungsform kann auch das Ultraschallwandler-Array 60 durch entsprechende Ansteuerung der Ultrschallwandler-Elemente 61 im Sende-Empfangsmodus sowohl für Longitudinal- als auch für Transversalwellen betrieben werden. In **Figur 4** ist dies für Longitudinalwellen 14 und 15 veranschaulicht. Das Ultraschallwandler-Array 60 wird hierzu durch entsprechende Ansteuerung elektronisch in zwei Untergruppen 61a und 61b getrennt. Eine dieser Untergruppen, beispielsweise die Untergruppe 61a arbeitet dann als Sender, während die andere Untergruppe 61b als Empfänger aktiv ist. Vorzugsweise sind in dieser Betriebsart die beiden Gruppen 61a und 61b durch eine inaktiv geschaltete Untergruppe 61c in der Arraymitte getrennt. Es hat sich bei dieser Betriebsart herausgestellt, daß die dadurch erreichte akustische Entkopplung ausreicht, um oberflächennahe Fehler 31a zu detektieren.

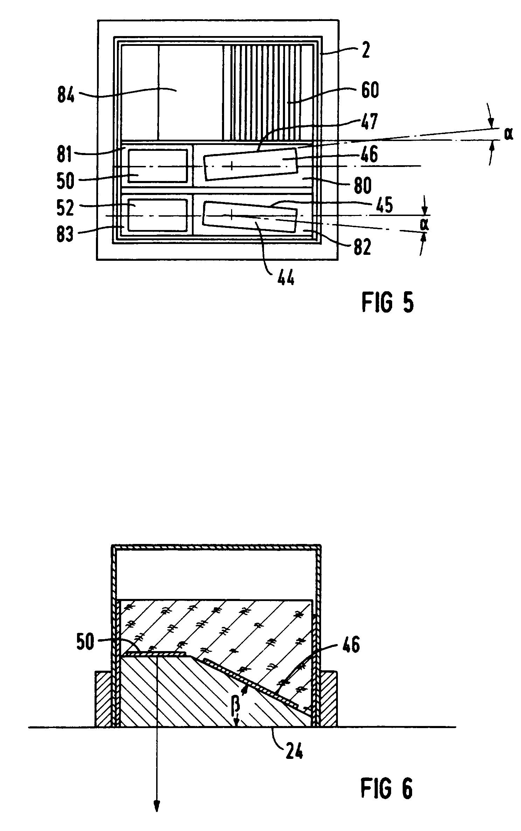

In der Ausführungsform gemäß **Figuren 5 und 6** sind im Gehäuse 2 des Prüfkopfes zusätzlich zwei jeweils als Sender und Empfänger betreibbare Ultraschallwandler 50 und 52 für einen 0°-Betrieb, d.h. für unterhalb des Prüfkopfes angeordnete Fehler, vorgesehen. Dadurch ist der von diesem Prüfkopf erfaßbare Tiefen- und Winkelbereich gegenüber der Ausführungsform nach Figuren 1 bis 4 erhöht.

In dieser Ausführungsform sind außerdem für den 70°-Longitudinalwellenmodus zwei nebeneinander angeordnete Ultraschallwandler 44, 46 vorgesehen. Das Ultraschallwandler-Array 60 ist auch in dieser Ausführungsform als Sender und Empfänger für Transversalwellen im Winkelbereich zwischen 45° und 60° sowie als Sender und Empfänger für Longitudinalwellen im Winkelbereich um 70° vorgesehen. Die Keilwinkel, mit denen die Ultraschallwandler 44, 46 und 60 auf den Vorlaufkörpern 80, 82 und 84 angeordnet sind, stimmen mit den Winkeln der Anordnung gemäß Figuren 1 bis 3 überein. Lediglich der Neigungswinkel α und ist in dieser Ausführungsform gegenüber der Ausführungsform gemäß Figur 1 verringert, um in etwa den gleichen seitlichen Fokusabstand für Longitudinalwellen zu erzielen. Auch in dieser Ausführungsform können die Sende- bzw. Empfangsflächen der Ultraschallwandler 44 und 46 zusätzlich unter einem Dachwinkel zueinander geneigt sein.

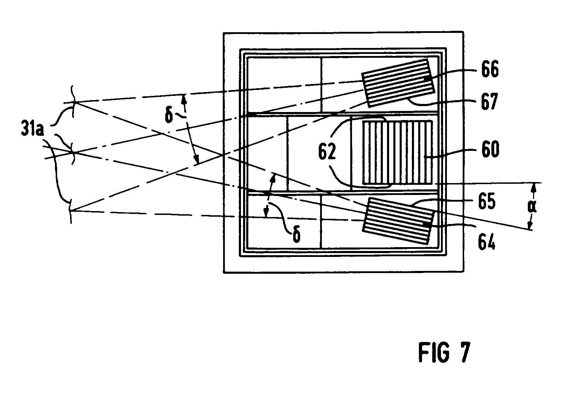

In der bevorzugten Ausführungsform gemäß **Figur 7** sind die Ultraschallwandler 42 und 44 (Figuren 1 bis 3) durch lineare Ultraschallwandler-Arrays 64 und 66 ersetzt. In einer bevorzugten Ausführungsform enthalten die Ultraschallwandler-Arrays 64 und 66 jeweils acht Ultraschallwandler-Elemente 61. Auch in dieser Ausführungsform sind die linearen Ultraschallwandler-Arrays 64 und 66 mit ihren Längskanten 65 bzw. 67 schräg zu den Längskanten 62 des Ultraschallwandler-Arrays 6 angeordnet.

Mit diesen Ultraschallwandler-Arrays 64 und 66 kann der laterale Sende- und/oder Empfangswinkel δ für den Longitudinalwellenmodus um eine senkrecht zur Oberfläche des Werkstücks gelegene Achse geschwenkt werden. Dadurch ist der laterale Winkelbereich, in dem oberflächennahe Fehler 31 erfaßt werden können, vergrößert. Auch in dieser Ausführungsform arbeitet die Wandleranordnung für Longitudinalwellen im Sende-Empfangsmodus, wobei alle Ultraschallwandler-Arrays 60, 64 und 66 sowohl als Sender und Empfänger betrieben werden können. Zusätzlich können die Arrays auch entsprechend Figur 4 durch elektronische Auftrennung selbst im Sende-Empfangs-Modus betrieben werden.

## Patentansprüche

1. Ultraschall-Prüfkopf zur Ultraschallprüfung von Fehlern in einem Werkstück (3), der eine in einem gemeinsamen Gehäuse (2) angeordnete Ultraschallwandler-Anordnung mit wenigstens einem Ultraschallwandler-Array (60) enthält, das für sich im Werkstück (3) ausbreitende Transversalwellen (12) im Impuls-Echo-Modus betreibbar ist, wobei die Ultraschallwandler-Anordnung wenigstens zwei akustisch voneinander getrennte Ultraschallwandler (60, 40, 42; 60, 44, 42; 60, 61a, 61b; 60, 64, 66) umfaßt, die im Sende-Empfangs-Modus für sich im Werkstück (3) oberflächennah ausbreitende Longitudinalwellen (10, 11) betreibbar sind.

2. Ultraschall-Prüfkopf nach Anspruch 1,
**dadurch gekennzeichnet, daß**
das Ultraschallwandler-Array (60) neben einem als Sender und Empfänger für Longitudinalwellen (10, 11) betreibbaren Ultraschallwandler (40, 42; 44, 46; 64, 66) angeordnet ist.

3. Ultraschall-Prüfkopf nach Anspruch 2,
**dadurch gekennzeichnet, daß**
das Ultraschallwandler-Array (60) zwischen zwei als Sender und Empfänger für Longitudinalwellen (10, 11) betreibbare Ultraschallwandler (40, 42; 64, 66) angeordnet ist.

4. Ultraschall-Prüfkopf nach Anspruch 2 oder 3,
**dadurch gekennzeichnet, daß**
der neben dem Ultraschallwandler-Array (60) angeordnete Ultraschallwandler (64, 66) als Ultraschallwandler-Array ausgebildet ist.

5. Ultraschall-Prüfkopf nach einem der vorhergehenden Ansprüche,
**dadurch gekennzeichnet, daß**
der neben dem Ultraschallwandler-Array (60) angeordnete Ultraschallwandler (40, 42; 44, 46; 64, 66) eine rechteckförmige Empfangs- oder Sendefläche hat und mit seiner Längskante (41, 43; 45, 47; 65, 67) schräg zur Längskante (62) des Ultraschallwandler-Arrays (60) angeordnet ist.

6. Ultraschall-Prüfkopf nach Anspruch 5 in Verbindung mit Anspruch 2,
**dadurch gekennzeichnet, daß**
die neben dem Ultraschallwandler-Array (60) angeordneten Ultraschallwandler (40, 42; 44, 46; 64, 66) derart angeordnet sind, daß ihre Längskanten (41, 43; 45,47; 65, 67) untereinander einen spitzen Winkel (2α) einnehmen.

7. Ultraschall-Prüfkopf nach Anspruch 5 oder 6,
**dadurch gekennzeichnet, daß**
das Ultraschallwandler-Array (60) und der oder die Ultraschallwandler (40, 42; 44, 46; 64, 66) auf akustisch voneinander getrennten keilförmigen Vorlaufkörpern (80, 82, 86) angeordnet sind, die sich in ihren Keilwinkeln (βₐ, β) unterscheiden.

8. Ultraschall-Prüfkopf nach Anspruch 7,
**dadurch gekennzeichnet, daß**
die Vorlaufkörper (80, 82) für die Ultraschallwandler (40, 42; 44, 46; 64, 66) zur Aufnahme eines parallel zu einer Ankoppelfläche (24) angeordneten zusätzlichen Ultraschallwandlers (50, 52) einen zur Ankoppelfläche (24) parallelen Abschnitt (81,83) aufweisen.

9. Verfahren zum Betrieb eines Ultraschall-Prüfkopfes nach einem der vorhergehenden Ansprüche,
**dadurch gekennzeichnet, daß**
das oder die Ultraschallwandler-Arrays (60, 64, 66) jeweils im Sende-Empfangs-Modus betrieben werden.

10. Verfahren nach Anspruch 9,
**dadurch gekennzeichnet, daß**
bei einem im Sende- und Empfangs-Modus betriebenen Ultraschallwandler-Array (60, 64, 66) zwei aus mehreren Ultraschallwandler-Elementen (61) bestehende räumlich voneinander getrennte Untergruppen (61a, 61b) gebildet werden.

11. Verfahren nach Anspruch 10,
**dadurch gekennzeichnet, daß**
die Untergruppen (61a, 61b) durch eine aus inaktiven Ultraschallwandler-Elementen gebildete Untergruppe (61c) voneinander getrennt sind.

## Claims

1. Ultrasonic probe for ultrasonically testing faults in a work piece (3), which ultrasonic probe contains an ultrasonic transducer arrangement which is arranged in a common housing (2) and has at least one ultrasonic transducer array (60) that can be operated in a pulse echo mode for transverse waves (12) propagating in the work piece (3), wherein the ultrasonic transducer arrangement comprises at least two acoustically separate ultrasonic transducers (60, 40, 42; 60, 44, 42; 60, 61a, 61b; 60, 64, 66) which can be operated in a transmit/receive mode for longitudinal waves (10, 11) propagating near a surface in the work piece (3).

2. Ultrasonic probe according to claim 1, characterised in that the ultrasonic transducer array (60) is arranged next to an ultrasonic transducer (40, 42; 44, 46; 64, 66) which can be operated as a transmitter and receiver for longitudinal waves (10, 11).

3. Ultrasonic probe according to claim 2, characterised in that the ultrasonic transducer array (60) is arranged between two ultrasonic transducers (40, 42; 64, 66) which can be operated as transmitters and receivers for longitudinal waves (10, 11).

4. Ultrasonic probe according to claim 2 or 3, characterised in that the ultrasonic transducer (64, 66), which is arranged next to the ultrasonic transducer array (60), is formed as an ultrasonic transducer array.

5. Ultrasonic probe according to one of the preceding claims, characterised in that the ultrasonic transducer (40, 42; 44, 46; 64, 66), which is arranged next to the ultrasonic transducer array (60), has a rectangular reception or transmission surface and has a longitudinal edge (41, 43; 45, 47; 65, 67) arranged obliquely relative to the longitudinal edge (62) of the ultrasonic transducer array (60).

6. Ultrasonic probe according to claim 5 in conjunction with claim 2, characterised in that the ultrasonic transducers (40, 42; 44, 46; 64, 66), which are arranged next to the ultrasonic transducer array (60), are arranged in such a way that their longitudinal edges (41, 43; 45, 47; 65, 67) form an acute angle (2α) with one another.

7. Ultrasonic probe according to claim 5 or 6, characterised in that the ultrasonic transducer array (60) and the ultrasonic transducer or the ultrasonic transducers (40, 42; 44, 46; 64, 66) are arranged on wedge-like precursor bodies (80, 82, 86) which are acoustically separate from each other and differ in terms of their wedge angles (βₐ, β).

8. Ultrasonic probe according to claim 7, characterised in that the precursor bodies (80, 82) for the ultrasonic transducers (40, 42; 44, 46; 64, 66) have a segment (81, 83), which is parallel to a coupling surface (24), for accommodating an additional ultrasonic transducer (50, 52) arranged parallel to the coupling surface (24).

9. Method for operating an ultrasonic probe according to one of the preceding claims, characterised in that the ultrasonic transducer array or the ultrasonic transducer arrays (60, 64, 66) are each operated in a transmit/receive mode.

10. Method according to claim 9, characterised in that two subgroups (61a, 61b), which are spatially separate from each other and consist of a plurality of ultrasonic transducer elements (61), are formed in the case of an ultrasonic transducer array (60, 64, 66) which is operated in the transmit and receive mode.

11. Method according to claim 10, characterised in that the subgroups (61a, 61b) are separated from each other by means of a subgroup (61c) formed of inactive ultrasonic transducer elements.

## Revendications

1. Tête de contrôle ultrasonore de défaut d'une pièce (3), qui comprend un dispositif transducteur ultrasonore disposé dans un boîtier (2) commun et comportant au moins un réseau (60) de transducteurs ultrasonores, lequel peut être commandé en mode d'écho impulsionnel pour des ondes (12) transversales se propageant dans la pièce (3), le dispositif transducteur ultrasonore comprenant au moins deux transducteurs ultrasonores (60, 40, 42 ; 60, 44, 42 ; 60, 61a, 61b ; 60, 64, 66), qui sont séparés acoustiquement l'un de l'autre et qui peuvent être commandés en mode d'émission-réception pour des ondes (10, 11) longitudinales se propageant à proximité de la surface dans la pièce (3).

2. Tête de contrôle ultrasonore suivant la revendication 1,
caractérisée en ce que
le réseau (60) de transducteurs ultrasonores est monté à côté d'un transducteur ultrasonore (40, 42 ; 44, 46 ; 64, 66) pouvant être commandé en tant qu'émetteur et récepteur d'ondes (10, 11) longitudinales.

3. Tête de contrôle ultrasonore suivant la revendication 2,
caractérisée en ce que
le réseau (60) de transducteurs ultrasonores est monté entre deux transducteurs (40, 42 ; 64, 66) ultrasonores pouvant être commandés en tant qu'émetteur et récepteur d'ondes (10, 11) longitudinales.

4. Tête de contrôle ultrasonore suivant la revendication 2 ou 3,
caractérisée en ce que
le transducteur (64, 66) ultrasonore monté à côté du réseau (60) de transducteurs ultrasonores est sous la forme d'un réseau de transducteurs ultrasonores.

5. Tête de contrôle ultrasonore suivant l'une des revendications précédentes,
caractérisée en ce que
le transducteur ultrasonore (40, 42 ; 44, 46 ; 64, 66) monté à côté du réseau (60) de transducteurs ultrasonores a une surface de réception ou d'émission de forme rectangulaire et est monté par son arête longitudinale (41, 43 ; 45, 47 ; 65, 67) en oblique par rapport à l'arête longitudinale (62) du réseau (60) de transducteurs ultrasonores.

6. Tête de contrôle ultrasonore suivant la revendication 5 prise avec la revendication 2,
caractérisée en ce que
les transducteurs (40, 42 ; 44, 46 ; 64, 66) ultrasonores montés à côté du réseau (60) de transducteurs ultrasonores sont montés de telle sorte que leurs arêtes longitudinales (41, 43 ; 45, 47 ; 65, 67) forment entre elles un angle aigu (2α).

7. Tête de contrôle ultrasonore suivant la revendication 5 ou 6,
caractérisée en ce que
le réseau (60) de transducteurs ultrasonores et le ou les transducteurs ultrasonores (40, 42 ; 44, 46 ; 64, 66) sont montés sur des pièces (80, 82, 86) s'avançant cunéiformes, qui sont séparées acoustiquement l'une de l'autre et dont les angles (βₐ, β) de coin sont différents.

8. Tête de contrôle ultrasonore suivant la revendication 7,
caractérisée en ce que
les pièces (80, 82) s'avançant pour les transducteurs ultrasonores (40, 42 ; 44, 46 ; 64, 66) comportent, pour la réception d'un transducteur ultrasonore (50, 52) supplémentaire monté en parallèle à une surface (24) de couplage un segment (81, 83) parallèle à la surface (24) de couplage.

9. Procédé de commande d'une tête de contrôle ultrasonore suivant l'une des revendications précédentes,
caractérisé en ce que
on commande le ou les réseaux (60, 64, 66) de transducteurs ultrasonores en mode d'émission-réception.

10. Procédé suivant la revendication 9,
caractérisé en ce que
on forme, dans un réseau (60, 64, 66) de transducteurs ultrasonores commandé en mode d'émission et de réception deux sous-groupes (61a, 61b) séparés l'un de l'autre dans l'espace et constitués de plusieurs éléments (61) de transducteurs ultrasonores.

11. Procédé suivant la revendication 10,
caractérisé en ce que
les sous-groupes (61a, 61b) sont séparés l'un de l'autre par un sous-groupe (61c) formé d'éléments de transducteurs ultrasonores inactifs.
